# EUROPEAN PATENT SPECIFICATION

(11) **EP 1 115 606 B1**
(45) Date of publication and mention of the grant of the patent: **30.07.2003**
(21) Application number: 99951309.6
(22) Date of filing: 10.09.1999
(51) Int. Cl.: B62D 25/20, B62D 29/04

(54) **FLOOR PANEL FOR A VEHICLE FLOOR**
BODENPLATTE FÜR FAHRZEUGBODEN
PANNEAU DE PLANCHER POUR PLANCHER DE VEHICULE

(30) Priority: 21.09.1998 SE 9803194
(43) Date of publication of application: 18.07.2001
(73) Proprietor: Sonoform AB, 573 24 Tranäs (SE)
(72) Inventor: KRONBLAD, Frithjof, S-573 36 Tranas (SE); BLIKSTAD, M rten, S-583 32 Linköping (SE)
(74) Representative: Willquist, Bo
(86) International application number: SE9901577
(87) International publication number: WO00017036

(56) References cited:
- EP-A1- 0 644 096
- DE-A1- 2 841 189
- GB-A- 1 582 696
- GB-A- 2 290 057
- US-A- 5 509 715

## Description

The present invention relates to a floor panel for a vehicle floor according to the pre-characterising part of claim 1. Such a floor panel is known from EP 644 096 A.

In vehicles, especially buses, it is a problem to produce floors with suitable characteristics. When constructing vehicle floors nowadays these are often made of sheet metal plates or wood fibre boards, on which floor coverings are then laid in the conventional way. In order to produce thermal and/or sound insulation floor coverings of insulation material suitable for the purpose are often also arranged on the upper side and/or underside of the floor. For fixing interior fittings and safety parts, such as seats and seat belts, anchoring elements, which pass through the floor and are anchored in the framework of the vehicle, have generally to be arranged.

According to one embodiment of the present invention a floor panel for a vehicle floor is produced, as specified by claim 1.

In addition, preferred embodiments also have any or some of the characteristics specified in the subordinate claims.

The floor panel for a vehicle floor according to the present invention has several advantages. Among other things, self-supporting floor panels are produced in the form of board-shaped sandwich laminates, from which a self-supporting vehicle floor can easily be manufactured, in which the fixing of interior fittings and safety parts, such as seats and seat belts etc. can be undertaken with the aid of profile sections incorporated into the floor, in such a way that the said fixings fulfil the safety requirements that can nowadays be expected to be demanded of such fixings. The floor panel has an integral floor covering functioning as a wearing layer and moisture barrier, thereby eliminating the need to lay a further floor covering. Owing to the light core material, laying the floor simultaneously produces both thermal and sound insulation. The floor panels can be provided with tongue and groove in order to permit laying of large floor surfaces, the joints thereby occurring in the floor covering being weldable in the conventional way. The floor panels according to the invention may, if so desired, be manufactured in one stage, floor covering, profile section for the fixing of seats and seat belts together with reinforcement and strengthening layer being placed in a mould, whereupon a structural foam, such as polyurethane foam or the like is poured into the mould, so that this bonds together the various constituent parts and forms load-bearer and insulation in the floor panel. When manufacturing floor panels in this way they can be cast with great freedom of form in order to suit a specific application in a special vehicle and, in contrast to panels of sheet metal plate or wood fibre boards are not susceptible to damp or prone to rust.

The invention will be explained in more detail below with the aid of examples of a preferred embodiment of a floor panel for a vehicle floor according to the present invention.
- Figure 1: in a partially cut-away view, shows the construction of the floor panel according to the invention
- Figure 2: shows a section through a preferred embodiment of the floor panel according to the invention

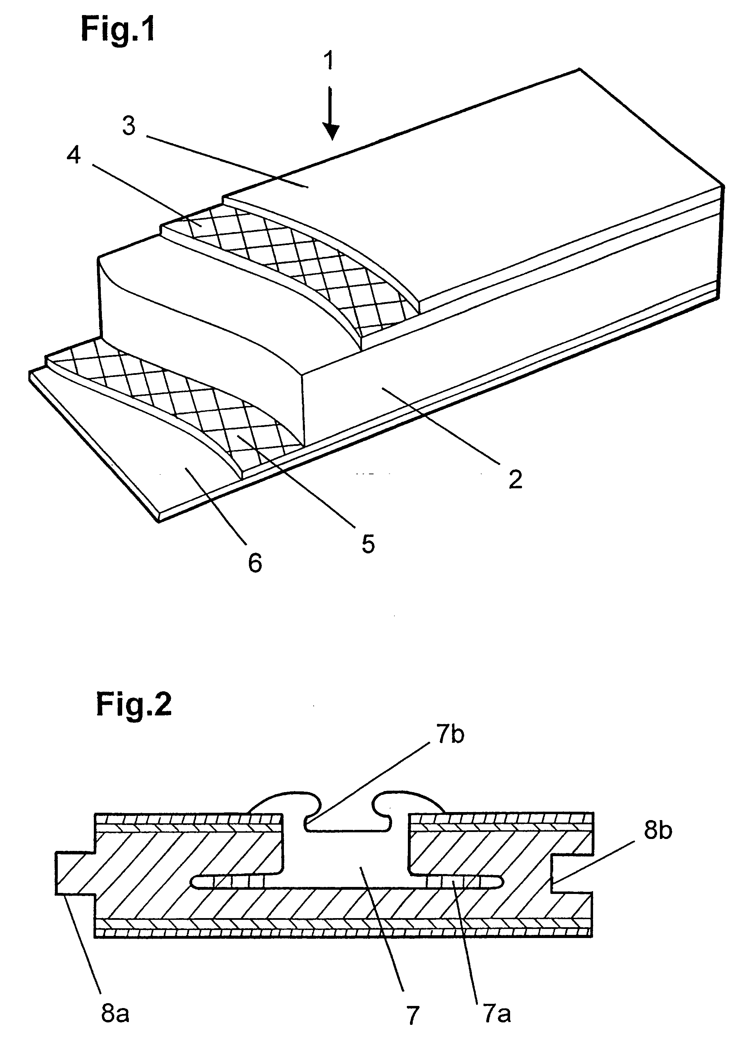

The board-shaped floor panel 1 shown in figure 1 comprises a light core material 2, in the form of a structural foam of polyurethane which, where necessary, may contain reinforcement, for example in the form of glass fibres. The core material 2 constitutes the load-bearing structure in the floor panel 1, whilst at the same time providing both thermal and sound insulation. Surrounding the light core material 2, a surface layer 3, comprising a floor covering suited to the purpose and preferably made of a plastic material, is arranged on at least one side of the floor panel 1. The floor covering of the surface layer 3 functions as a wearing surface and moisture barrier and can also be provided with non-slip protection. So that sharp objects such as pointed heels and umbrella tips and the like will not leave permanent impressions in the core material 2, it is necessary to arrange a strengthening layer 4 between the surface layer 3 and the core material 2, the strengthening layer 4 being made in the form of a woven fabric and a fibre material such as glass, carbon or aramide fibres. The strengthening layer 4 distributes any spot loads so that these are absorbed over a larger area.

It is necessary, especially if the core material 2 is made in one thin layer, to arrange a balancing strengthening layer 5 on the opposite side of the floor panel to the surface layer in order to produce a balanced state of tension in the sandwich laminate, which counteracts any tendencies of the sandwich laminate to bend. A sealing layer 6 may be arranged outermost on the opposite side of the sandwich laminate to the surface layer 3.

As shown in figure 2, profile sections, of aluminium for example, intended for fixing purposes, can also be fixed to the light core material 2. The said profile sections 7 are arranged so that they are well anchored in the light core material 2, for example by being cast therein. That part of a profile section 7 cast in the core material 2 may be provided with perforated anchoring elements in the form, for example, of wings 7a, which serve to provide a very good anchorage in the core material 2 of the floor panel. The part of the profile section 7 passing through the surface layer 3 appropriately has a fixing channel 7b or the like, which facilitates the fixing both of seats and of seat belts.

The floor panels 1 are made so that each floor panel at its edges is provided with means 8a, 8b designed to allow the floor panels 1 to be joined together, in order to facilitate the laying of larger surfaces such as entire bus floors. The said means of joining 8a, 8b may, for example, be formed in complementary pairs as shown in figure 2 in the form of a groove 8b and a tongue 8a, which when joining together may also be supplemented by adhesive bonding. After joining together in this way the plastic floor covering is then welded together at the joints in the known way in order to produce a moisture-tight surface.

A vehicle floor produced in this way is also flexible, so that it can follow the movement that generally occurs in the framework of a vehicle, such as a bus.

It will be obvious that even if the above-mentioned invention is described principally in connection with bus floors, it is also suitable for use in a number of different vehicles, such as aircraft, trains, passenger cars, boats etc.

## Claims

1. Floor panel (1) for a vehicle floor, constructed as aboard-shaped sandwich laminate (1) comprising a layer of a light core material (2), and a surface layer (3), covering the light core material (2) on at least one side, and fixed to the light core material (2) there is at least one profile section (7), intended for fixing purposes, the surface layer (3) being in the form of a floor covering, the board-shaped sandwich laminate (1) being provided along its edges with means (8a, 8b) designed to allow a plurality of board-shaped sandwich laminates to be joined together, **characterised in that** the core material (2) is in the form of a polyurethane, that the profile section (7) has a part passing through the surface layer (3) and having a fixing channel (7b), that a reinforcing layer (4) of a fibre material in the form of a woven fabric, is arranged between the surface layer (3) and the layer of core material (2) and that a balancing layer (5), of a fibre material in the form of a woven fabric, is arranged on the opposite side of the core material layer (2) to the surface layer (3).

2. Floor panel (1) according to claim 1, **characterised in that** a sealing layer (6) is arranged outermost on the opposite side of the sandwich laminate to the surface layer (3).

3. Floor panel (1) according to claims 1 or 2, **characterised in that** the profile section (7) intended for fixing purposes is provided with perforated anchoring elements (7a), which are cast into the light core material (2).

4. Floor panel (1) according to any of the preceding claims, **characterised in that** the means of joining are designed as a groove (8b) and a tongue (8a) respectively.

## Patentansprüche

1. Bodentafel (1) für einen Fahrzeugboden, die als ein plattenförmiges Sandwichlaminat (1) aufgebaut ist, mit einer Schicht aus einem leichten Kernmaterial (2) und einer Oberflächenschicht (3), die das leichte Kernmaterial (2) an mindestens einer Seite abdeckt, wobei an dem leichten Kernmaterial (2) mindestens ein Profilabschnitt (7) befestigt ist, der für Befestigungszwecke bestimmt ist, wobei die Oberflächenschicht (3) in der Form eines Bodenbelags ist, wobei das plattenförmige Sandwichlaminat (1) entlang seiner Ränder mit Mitteln (8a, 8b) versehen ist, die ausgestaltet sind, um zu ermöglichen, dass eine Mehrzahl von plattenförmigen Sandwichlaminaten zusammengefügt werden, **dadurch gekennzeichnet, dass** das Kernmaterial (2) in der Form eines Polyurethans ist, dass der Profilabschnitt (7) einen Teil aufweist, der durch die Oberflächenschicht (3) läuft und einen Befestigungskanal (7b) aufweist, dass eine Verstärkungsschicht (4) aus einem Fasermaterial in der Form eines Gewebes zwischen der Oberflächenschicht (3) und der Schicht des Kernmaterials (2) angeordnet ist, und dass eine Ausgleichsschicht (5) eines Fasermaterials in der Form eines Gewebes an der entgegengesetzten Seite der Kernmaterialschicht (2) an der Oberflächenschicht (3) angeordnet ist.

2. Bodentafel (1) gemäß Anspruch 1, **dadurch gekennzeichnet, dass** eine Abdichtungsschicht (6) zuäußerst an der entgegengesetzten Seite des Sandwichlaminats an der Oberflächenschicht (3) angeordnet ist.

3. Bodentafel (1) gemäß Anspruch 1 oder 2, **dadurch gekennzeichnet, dass** der für Befestigungszwecke bestimmte Profilabschnitt (7) mit perforierten Verankerungselementen (7a) versehen ist, die in dem leichten Kernmaterial (2) eingegossen sind.

4. Bodentafel (1) gemäß einem der vorhergehenden Ansprüche, **dadurch gekennzeichnet, dass** die Mittel zum Verbinden als eine Nut (8b) bzw. eine Feder (8a) ausgestaltet sind.

## Revendications

1. Panneau de plancher (1) pour un plancher de véhicule, construit comme un stratifié en sandwich en forme de planche (1) comprenant une couche d'une matière d'âme légère (2) et une couche de surface (3) qui couvre la matière d'âme légère (2) sur au moins une face, et, fixé à la matière d'âme légère (2), il y a au moins un profilé (7) prévu pour des fonctions de fixation, la couche de surface (3) étant sous la forme d'un revêtement de sol, le stratifié en sandwich en forme de planche (1) comportant le long de ses bords des moyens (8a, 8b) conçus pour permettre la jonction mutuelle d'une pluralité de stratifiés en sandwich en forme de planche, **caractérisé en ce que** la matière d'âme (2) est sous la forme d'un polyuréthane, **en ce que** le profilé (7) comprend une partie qui traverse la couche de surface (3) et comporte un canal de fixation (7b), **en ce qu'**une couche de renforcement (4) en une matière fibreuse sous la forme d'une étoffe tissée est placée entre la couche de surface (3) et la couche de matière d'âme (2), et **en ce qu'**une couche d'équilibrage (5) en une matière fibreuse sous la forme d'une étoffe tissée est placée sur la face de la couche de matière d'âme (2) à l'opposé de la couche de surface (3).

2. Panneau de plancher (1) selon la revendication 1, **caractérisé en ce qu'**une couche d'étanchéité (6) est formée à l'extérieur, sur la face du stratifié en sandwich à l'opposé de la couche de surface (3).

3. Panneau de plancher (1) selon la revendication 1 ou 2, **caractérisé en ce que** le profilé (7) prévu pour des fonctions de fixation comporte des éléments d'ancrage perforés (7a), qui sont moulés dans la matière d'âme légère (2).

4. Panneau de plancher (1) selon une quelconque des revendications précédentes, **caractérisé en ce que** les moyens de jonction sont sous la forme d'une rainure (8b) et d'une languette (8a) respectivement.
